## Europäisches Patentamt
## European Patent Office
## Office européen des brevets

(11) Publication number: **0 004 125 B1**

# EUROPEAN PATENT SPECIFICATION

(45) Date of publication of patent specification: **26.05.82**

(51) Int. Cl.³: **B 01 D 46/40, B 65 G 53/60**

(21) Application number: **79300034.0**

(22) Date of filing: **10.01.79**

(54) Apparatus for separating airborne matter.

(30) Priority: **04.02.78 GB 456478**

(43) Date of publication of application:
**19.09.79 Bulletin 79/19**

(45) Publication of the grant of the patent:
**26.05.82 Bulletin 82/21**

(84) Designated Contracting States:
**BE DE FR NL**

(56) References cited:
**CH - A - 217 464**
**DE - A - 2 328 178**
**DE - U - 1 912 879**
**DE - U - 6 916 897**
**GB - A - 1 081 384**
**GB - A - 1 247 211**
**US - A - 3 580 644**
**US - A - 3 580 645**
**US - A - 3 612 616**
**US - A - 3 829 165**

(73) Proprietor: **Hambro Machinery Limited
Chandos Street
Netherfield Nottingham.NG4 2PF (GB)**

(72) Inventor: **Brooks, Derrick William
18 Ridge Lane Radcliffe-on-Trent
Nottingham. NG12 1BD (GB)**

(74) Representative: **Coxon, Philip et al,
Eric Potter & Clarkson 14 Oxford Street
Nottingham NG1 5BP (GB)**

Courier Press, Leamington Spa, England.

Apparatus for separating airborne matter

This invention relates to separation apparatus for separating air-borne matter.

Conventionally, air-borne matter such as matter conveyed by a low pressure pneumatic conveyor is separated by a mechanical device, such as a cyclone. Such devices, however, are generally large and expensive items of equipment.

It has been proposed to provide separation apparatus which incorporates a screen to separate air-borne material from an air stream. There is however a problem with such apparatus as material to be separated tends to clog the screen and thus prevent continuous separation.

In U.S. specification no. 3486309 there is described an apparatus which comprises an inlet for air-borne material, a screen, an outlet for air and an outlet for separated material, the latter being provided with a rotary air-lock. The apparatus is provided with means to reverse the flow of air across the screen to cause separated material to be removed from the screen. The requirement for reversing the flow of air does not allow for continuous operation however.

A more recent U.S. patent no. 3612616 describes a similar apparatus to that described above but also includes a valve in the inlet duct to close the inlet during the reverse air flow operation. This does obstruct the reverse flow of air along an associated pneumatic conveyor duct but does not solve the problem of continuous operation.

It is an object of the present invention to provide a separation apparatus for air-borne material which is capable of operating for relatively extended periods without interrupting the separation process for cleaning the screen, such as by reverse air flow.

According to the present invention we provide apparatus for separating air-borne material comprising an inlet for air-borne material, an outlet for separated product, a duct connecting said inlet to said outlet, said duct increasing in cross-sectional area away from the inlet, a screen arranged to form at least a part of one wall of said duct so that the screen and an opposite wall of the duct form two opposite sides of a rectangular cross-section, the wall and the screen being disposed at an angle to one another in the range 10°—20°, a deflector plate provided opposite said inlet and extending in the same plane as said screen whereby air-borne material entering through said inlet is deflected downwardly into said duct, the inlet having an inlet axis which is arranged at an angle of 25°—45° to the plane of the deflector plate, the screen terminating in an end wall which is arranged at an angle of 115°—135° to the plane of the screen, and air lock means arranged at the outlet.

The arrangement according to the invention effects separation of air-borne material by decelerating the air stream in the duct and the positioning of the deflector plate opposite the inlet and in the same plane as the screen prevents direct impact of the air-borne material onto the screen where it may be retained by air pressure and cause the screen to become blocked.

Preferably, the inlet comprises a pair of baffles and at least one of said baffles is angularly adjustable. This enables the incoming air flow to be controlled and enables a single design of apparatus to be used with a variety of different inputs of air-borne material.

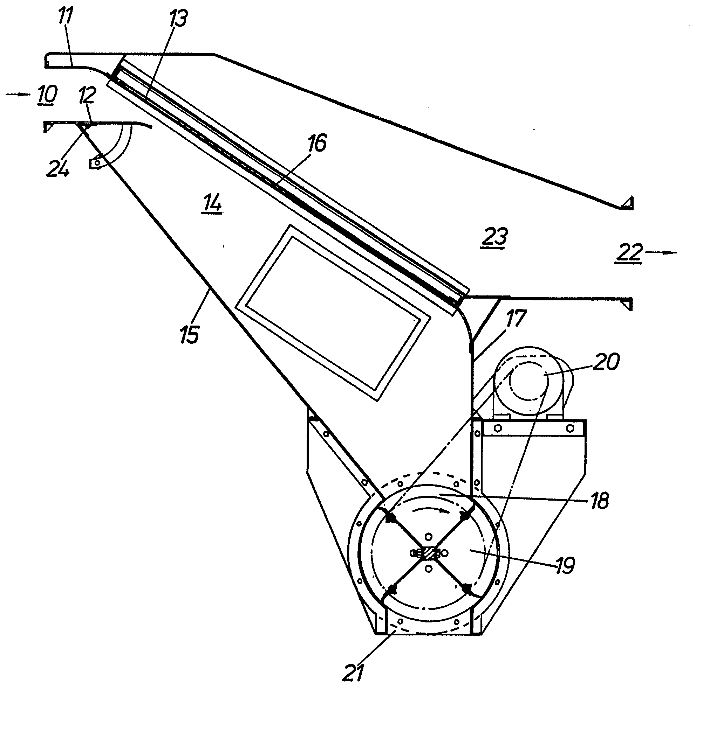

A preferred form of separation apparatus according to the invention is hereinafter described with reference to the accompanying drawing which is a cross-section of the separation apparatus.

The apparatus which is constructed of sheet metal comprises an inlet 10 for air-borne material defined by a pair of baffles 11 and 12. Opposite said inlet there is provided a deflector plate 13 to deflect the air-borne material into the duct or separating zone 14.

The zone 14 is rectangular in cross section and increases in cross sectional area away from inlet 10. It is defined by a lower wall 15 and on the opposite side a perforated metal screen 16.

The screen 16 terminates in an end wall 17 which, together with the wall 15, defines an inlet 18 to a rotary air-lock device 19. The rotary air-lock 19 is arranged to rotate in a clockwise direction and to be driven by the motor 20. An outlet 21 for separated product is provided at the lower end of said rotary air-lock 19 and outlet 22 for air is provided by the duct 23 which extends on the opposite side of the screen 16.

The device functions as follows; air carrying air-borne matter, for example, from a low pressure pneumatic conveyor, enters the inlet 10 and is deflected by the baffles and deflector plate so as to enter the separation zone 14. As shown the baffle 12 is adjustable about pivot 24 to provide the desired air flow.

As the air is decelerated in the zone 14 air tends to pass through the screen 16 towards the outlet 22 and separated product tends to fall towards the rotary air-lock whereby it is discharged via the outlet 21.

Incoming air, together with air-borne material, enters the device at an angle with respect to the screen 16. As the material passes into the separating zone, the air velocity is reduced as incoming air expands in the increasing cross-sectional area away from the inlet 10 and passes through the screen 16. This causes a tangential air flow in the separating zone relative to the material with the result that the air velocity in the separation zone is no longer sufficient to carry the material which consequently falls into the rotary air-lock.

The angle of inclination of the screen 16 is such that the incoming air tends to form a boundary layer parallel to the screen 16 having the effect of largely stopping any material touching it. It is self cleaning and because material is not in contact with the screen frictional losses are minimal.

By driving the rotary air-lock 19 in the same direction as the product flow a smooth deceleration is obtained which tends to result in low degradation of the separated product.

The separation apparatus as described above is found to be extremely convenient for separating low density materials from a stream of air, particularly irregularly shaped low density materials. Such materials may be fibrous vegetable materials such as paper, tobacco or tea.

In particular the apparatus is much more compact than an equivalent capacity cyclone and also tends to be much more efficient in that no physical work is carried out on the product to be separated and the rates of acceleration and deceleration of air are much less. Furthermore because of the fact that no physical work is carried out on the product there is a reduced tendency for degradation of the separated product.

Furthermore, capacity is simply increased by varying the width of the unit whereas in an equivalent cyclone this is achieved by means of increasing diameter and height.

## Claims

1. Apparatus for separating air-borne material comprising an inlet (10) for air-borne material, an outlet (21) for separated product, a duct (14) connecting said inlet to said outlet, said duct increasing in cross-sectional area away from said inlet, a screen (16) arranged to form at least a part of one wall of said duct so that the screen and an opposite wall (15) of the duct form two opposite sides of a rectangular cross-section, the wall and the screen being disposed at an angle to one another in the range 10°—20°, a deflector plate (13) provided opposite said inlet and extending in the same plane as said screen whereby air-borne material entering through said inlet is deflected downwardly into said duct, the inlet having an inlet axis which is arranged at an angle of 25°—45° to the plane of the deflector plate, the screen terminating in an end wall (17) which is arranged at an angle of 115°—135° to the plane of the screen, and air lock means (19) arranged at the outlet.

2. Apparatus according to Claim 1 in which the inlet comprises a pair of baffles (11 and 12) at least one of which (12) is angularly adjustable.

## Revendications

1. Séparateur pour la séparation de matières charriées par un courant d'air, caractérisé en ce qu'il comporte essentiellement une ouverture d'entrée (10) pour l'introduction du courant d'air chargé du produit à séparer; une ouverture de sortie (21) pour le produit séparé; une conduite (4) entre ces deux ouvertures, dont la section transversale augmente graduellement à partir de l'entrée; un tamis (16) disposé de manière à former au moins une partie d'une des parois de ladite conduite, de sorte que le tamis et la paroi y opposée (15) de la conduite forment deux faces opposées d'une zone à section rectangulaire, tamis et paroi opposée dont les plans forment un angle de 10 à 20°; et une plaque déflectrice (13) opposée à ladite ouverture d'entrée et disposée dans le même plan que le tamis, plaque déflectrice servant à dévier le courant d'air chargé du produit à séparer et l'envoyer dans ladite conduite; en ce que l'axe de ladite ouverture d'entrée forme un angle de 25—40° avec le plan de ladite plaque déflectrice et ledit tamis se termine en une paroi terminale (17), qui forme un angle de 115—135° avec le pan du tamis; et en ce qu'un sas à air (19) est prévu sur ladite ouverture de sortie.

2. Séparateur selon la revendication 1, caractérisé en ce que ladite ouverture d'entrée est munie d'une paire de chicanes (11 et 12), dont l'une au moins (12) est pivotable en vue du réglage de sa position angulaire.

## Patentansprüche

1. Vorrichtung zur Abtrennung von luftgetragenen Stoffen, gekennzeichnet durch einen Einlaß (10) für luftgetragene bzw. von Luft mitgeführte Stoffe, einen Auslaß (21) für das abgetrennte Erzeugnis, eine den Einlaß mit dem Auslaß verbindende Leitung (14), deren Querschnittsfläche sich vom Einlaß ausgehend vergrößert, ein Sieb (16), das mindestens einen Teil der einen Wand der Leitung bildet, so daß das Sieb und eine gegenüberliegende Wand (15) der Leitung zwei gegenüberliegende Seiten eines rechteckigen Querschnitts bilden, wobei Wand und Sieb unter einem Winkel im Bereich von 10—20° zueinander angeordnet sind, eine dem Einlaß gegenüberliegende und sich in dieselbe Richtung wie das Sieb erstreckende Ablenk- bzw. Prallplatte (13), wobei über den Einlaß eintretende, von der Luft getragene bzw. mitgeführte Stoffe abwärts in die Leitung ablenkbar sind, wobei der Einlaß eine unter einem Winkel von 25—45° zur Ebene der Ablenk- bzw. Prallplatte angeordnete Einlaßachse aufweist und wobei das Sieb in eine unter einem Winkel von 115—135° zur Siebebene angeordnete Endwand (17) übergeht, und eine am Auslaß vorgesehene Luftschleuse (19).

2. Vorrichtung nach Anspruch 1, dadurch gekennzeichnet, daß der Einlaß zwei Leitbleche (11 und 12) aufweist, von denen mindestens das eine (12) winkelmäßig verstellbar ist.